# EUROPÄISCHE PATENTSCHRIFT

(11) **EP 3 645 404 B1**
(45) Veröffentlichungstag und Bekanntmachung des Hinweises auf die Patenterteilung: **23.06.2021**
(21) Anmeldenummer: 18727224.0
(22) Anmeldetag: 18.05.2018
(51) Int. Cl.: B65B 35/30, B65B 59/00, B65B 11/00

(54) **TRANSPORTSTRECKE UND VERFAHREN ZU DEREN ANPASSUNG AN DIMENSIONIERUNGEN VON TRANSPORTEINHEITEN**
TRANSPORT TRACK AND METHOD FOR ADAPTING TO DIMENSIONS OF TRANSPORT UNITS
VOIE DE TRANSPORT ET PROCÉDÉ D'ADAPTATION AUX DIMENSIONS D'UNITÉS DE TRANSPORT

(30) Priorität: 27.06.2017 DE 102017114194
(43) Veröffentlichungstag der Anmeldung: 06.05.2020
(73) Patentinhaber: Krones Aktiengesellschaft, 93073 Neutraubling (DE)
(72) Erfinder: WERNER, Jürgen, 93073 Neutraubling (DE); LUBER, Johann, 93073 Neutraubling (DE); SPINDLER, Herbert, 93073 Neutraubling (DE); MAYER, Thomas-Florian, 93073 Neutraubling (DE); KOCH, Peter, 93073 Neutraubling (DE); PRANKL, Irmengard, 93073 Neutraubling (DE)
(74) Vertreter: Benninger, Johannes
(86) Internationale Anmeldenummer: PCT/EP2018/063057
(87) Internationale Veröffentlichungsnummer: WO 2019/001844

(56) Entgegenhaltungen:
- EP-A1- 0 001 967
- DE-A1-102016 214 339
- DE-C1- 10 037 714
- DE-U1- 29 608 343

## Beschreibung

Die vorliegende Erfindung betrifft ein Verfahren zum Anpassen einer Transportstrecke an jeweilige Dimensionierungen von entlang der Transportstrecke zu bewegenden und zu manipulierenden Transporteinheiten mit den Merkmalen des unabhängigen Verfahrensanspruchs 1. Zudem betrifft die Erfindung ein modifizierbares System zum Transportieren und Einwirken auf mindestens einen Artikel aufweisende Transporteinheiten mit den Merkmalen des unabhängigen Anspruchs 9.

Aus dem Stand der Technik sind bereits Verpackungsmaschinen bekannt, bei welchen durch Getränkebehälter ausgebildete Artikel auf einem als Bestandteil eines Gruppiermoduls umlaufend geführten Riemen aufstehen und über den umlaufend geführten Riemen horizontal bewegt werden. Während der fortlaufenden Bewegung über den Riemen können Einteilstäbe rückseitig mit Artikeln bzw. Getränkebehältern in Anlage treten, diese Getränkebehälter bzw. Artikel gegenüber einer Transportgeschwindigkeit des Riemens beschleunigen und hierdurch in Bewegungsrichtung voneinander beabstandete Zusammenstellungen aus jeweils mehreren Artikeln bzw. Getränkebehältern bilden. Eine relative Beabstandung dieser Einteilstäbe zueinander muss hierbei jeweils auf eine Dimensionierung der zu bildenden Zusammenstellungen an Artikeln abgestimmt sein, weshalb die Einteilstäbe bei bisher in der Praxis bekannten Gruppierstationen von einer umlaufend angetriebenen Kette abgenommen und hierauf an Positionen, welche auf die jeweilige aus Artikeln zu bildende Zusammenstellung abgestimmt sind, wiederum an der Kette befestigt werden.

Häufig umfasst eine Verpackungsmaschine zudem ein auf das Gruppiermodul folgendes Verpackungsmodul, welchem die Zusammenstellungen aus jeweils mehreren Artikeln bzw. Getränkebehältern zugeführt werden können. Auch das Verpackungsmodul kann über einen Riemen verfügen, welcher die Zusammenstellungen an Artikeln bzw. Getränkebehältern durch das Verpackungsmodul bewegt und auf welchem die Zusammenstellungen an Artikeln bzw. Getränkebehältern hierbei aufstehen. Zeitlich während der Bewegung der Zusammenstellungen an Artikeln bzw. Getränkebehältern über den Riemen können im Verpackungsmodul auf die Zusammenstellungen an Artikeln bzw. die Zusammenstellungen an Getränkebehältern Zuschnitte aus thermoplastischem Verpackungsmaterial aufgebracht werden. Hierzu können Stäbe vorgesehen sein, welche von unterhalb einer für die Zusammenstellungen an Artikeln vorgesehenen Transportebene auftauchen und sodann die Zuschnitt aus thermoplastischem Verpackungsmaterial auf die Zusammenstellungen an Artikeln aufbringen. Auch eine relative Beabstandung dieser ggf. umlaufend geführten Stäbe zueinander muss zum gezielten Aufbringen der Zuschnitte aus thermoplastischem Verpackungsmaterial auf die jeweilige Dimensionierung der Zusammenstellungen abgestimmt sein. In der Praxis werden bei einer Formatumstellung bzw. bei einem Wechsel zwischen aufeinanderfolgenden mit thermoplastischem Verpackungsmaterial zu versehenden Zusammenstellungen, die unterschiedliche Dimensionierungen aufweisen, die einzelnen Stäbe von einer umlaufend angetriebenen Kette abgenommen und sodann an bestimmten Positionen festgesetzt, welche auf die Dimensionierung der jeweiligen Zusammenstellung bzw. auf die hiermit in Zusammenhang stehende Dimensionierung der aus thermoplastischem Verpackungsmaterial gebildeten flächigen Zuschnitte abgestimmt bzw. ausgerichtet sind.

Die DE 10 2016 214 339 A1 offenbart ein Verfahren zum Formatwechsel bei einer Gruppiervorrichtung, die dem Gruppieren von Stückgut mittels Einteilfingern dient, welche in einem geschlossenen Strom auf einer Horizontalfördereinrichtung transportiert werden. Da unterschiedliche Stückgutdimensionen unterschiedliche Teilungsabstände der Einteilfinger erfordern, können die Einteilfinger entlang der Längserstreckungsrichtung von Einteilerleisten verschoben und in den jeweiligen Positionen fixiert werden. Die Einteilerleisten werden umlaufend mit Hilfe geeigneter Zugmittel bewegt und sind quer zur Transportrichtung orientiert. Auf diese Weise soll ein universell anpassbares System bereitgestellt und solchermaßen vermieden werden, dass für unterschiedliche Produkte oder Stückgüter jeweils separate Sätze von komplett vormontierten und bestückten Einteilerleisten benötigt und mit entsprechend großem Arbeitsaufwand montiert werden müssen. Um die Verschiebbarkeit und Feststellbarkeit der Einteilfinger auf den Einteilerleisten zu ermöglichen, sind diese entsprechend profiliert und mit geeigneten Befestigungsmitteln ausgestattet.

Die DE 100 37 714 C1 offenbart weiterhin eine Folien-Einschlag-Vorrichtung einer Verpackungsmaschine, die dem Umschlingen von zu verpackenden Gegenständen mit einem Folienabschnitt dient. Die Folien-Einschlag-Vorrichtung sieht einen auf einer geschlossenen Bahn umlaufenden Folien-Mitnehmerstab vor, der auf seiner Bahn die Transportebene, auf der die zu verpackenden Gegenstände transportiert werden, zweimal schneidet. Zudem ist bei der Vorrichtung vorgesehen, dass die Bahnform, die der Folien-Mitnehmerstab beschreibt, frei programmierbar ist und sich durch Überlagerung von einer Rotations- und einer Translationsbewegung des mindestens einen Mitnehmerstabes ergibt.

Eine weitere Vorrichtung zum Umwickeln einer Folie um eine Gruppe von Gegenständen ist durch die Gebrauchsmusterschrift DE 296 08 343 U1 offenbart. Auch bei dieser bekannten Vorrichtung, die einen umlaufend bewegten Folien-Mitnehmerstab vorsieht, kann dessen Bahnverlauf variiert und dessen Umlaufgeschwindigkeit bedarfsweise verändert werden, und zwar in Abhängigkeit von den Abmessungen der mit Folie zu umwickelnden Gegenstände.

Zwar sind damit verschiedene Einrichtungen bekannt, um ohne bedeutende Maschineneingriffe und damit mit reduziertem Umrüstungsaufwand eine Anpassung von Eingriffselementen an unterschiedliche Produktgrößen zu ermöglichen. Dennoch sind die Veränderungsmöglichkeiten der jeweils bekannten Vorrichtungen begrenzt, so dass ein Formatwechsel dennoch umständlich sein und einen hohen Zeitaufwand erfordern kann, weshalb Vorrichtungen und Verfahren wünschenswert sind, welche einen Formatwechsel in noch größerem Umfang und/oder auf noch einfachere Art und Weise erlauben als es aus dem Stand der Technik bekannt ist.

Eine Aufgabe der Erfindung kann aus diesem Grunde darin gesehen werden, eine Möglichkeit zur Verfügung zu stellen, über welche eine Transportstrecke auf einfache und zeitoptimierte Art und Weise und mit großem Variationsumfang auf Dimensionierungen jeweiliger zu manipulierender Transporteinheiten abgestimmt werden kann.

Die obige Aufgabe wird durch die Gegenstände gelöst, welche die Merkmale im jeweiligen unabhängigen Anspruch umfassen. Weitere vorteilhafte Ausgestaltungen werden durch die Unteransprüche beschrieben.

Die Erfindung betrifft ein Verfahren zum Anpassen einer Transportstrecke an jeweilige Dimensionierungen von entlang der Transportstrecke zu bewegenden und zu manipulierenden Transporteinheiten, welche mindestens einen Artikel aufweisen.

Ein Schritt des Verfahrens sieht ein Vorgeben, Ermitteln und/oder Feststellen von mit Dimensionierungen der entlang der Transportstrecke zur bewegenden Transporteinheiten in Zusammenhang stehenden Befestigungspositionen für mindestens zwei vorzugsweise stabförmig ausgebildete Arbeitselemente an wenigstens einem Antriebsmittel vor. Es ist denkbar, dass die Dimensionierungen optisch erfasst werden und hierauf ggf. mittels einer Steuer- und/oder Regeleinheit die mit den Dimensionierungen in Zusammenhang stehenden Befestigungspositionen für die mindestens zwei vorzugsweise stabförmig ausgebildeten Arbeitselemente vorgegeben, ermittelt und/oder festgestellt werden. Hierzu kann ggf. ein entsprechender Algorithmus auf der Steuer- und/oder Regeleinheit hinterlegt sein.

Auch ist es denkbar, dass Informationen zu den jeweiligen entlang der Transportstrecke zu bewegenden Transporteinheiten von einem Benutzer bereitgestellt werden, aus den Informationen die Dimensionierungen der entlang der Transportstrecke zu bewegenden Transporteinheiten abgeleitet werden und sodann die mit den jeweiligen Dimensionierungen der entlang der Transportstrecke zu bewegenden Transporteinheiten in Zusammenhang stehenden Befestigungspositionen für die mindestens zwei vorzugsweise stabförmig ausgebildeten Arbeitselemente an dem wenigstens einen Antriebsmittel vorgegeben, ermittelt und/oder festgestellt werden.

Weiter werden die mindestens zwei vorzugsweise stabförmig ausgebildeten Arbeitselemente an dem wenigstens einen Antriebsmittel an einer jeweiligen vorgegebenen, ermittelten und/oder festgestellten Befestigungsposition festgesetzt. Es ist vorstellbar, dass die nachfolgend noch beschriebene mindestens eine Handhabungseinrichtung die mindestens zwei vorzugsweise stabförmig ausgebildeten Arbeitselemente bis zur jeweiligen vorgegebenen, ermittelten und/oder festgestellten Befestigungsposition bewegt und an der jeweiligen Befestigungsposition am wenigstens einen Antriebsmittel festsetzt.

Ein weiterer Schritt sieht ein Bewegen der Transporteinheiten entlang der Transportstrecke vor, wobei zeitlich überlagert mit der Bewegung das wenigstens eine Antriebsmittel umlaufend angetrieben wird und hieraus resultierend die mindestens zwei vorzugsweise stabförmig ausgebildeten und an der jeweiligen Befestigungsposition festgesetzten Arbeitselemente auf die Transporteinheiten einwirken. Es kann sein, dass die mindestens zwei vorzugsweise stabförmig ausgebildeten Arbeitselemente aus dem umlaufenden Antrieb des wenigstens einen Antriebsmittels resultierend jeweils mehrere Transporteinheiten bzw. Artikel aufweisende Gruppierungen bilden. In einer weiteren Ausführungsform kann es sein, dass die mindestens zwei vorzugsweise stabförmig ausgebildeten Arbeitselemente aus dem umlaufenden Antrieb des wenigstens einen Antriebsmittels resultierend jeweils thermoplastisches Verpackungsmaterial auf die entlang der Transportstrecke bewegten Transporteinheiten aufbringen. Bei solchen Ausführungsformen können die Transporteinheiten zusammen mit dem jeweiligen aufgebrachten thermoplastischen Verpackungsmaterial in einen Schrumpftunnel geführt werden, worin das thermoplastische Verpackungsmaterial auf die Transporteinheiten aufgeschrumpft wird und Gebinde aus den Transporteinheiten zusammen mit dem aufgeschrumpften thermoplastischen Verpackungsmaterial entstehen.

Es ist mindestens eine Handhabungseinrichtung vorgesehen, welche zeitlich nach dem Vorgeben, dem Ermitteln und/oder dem Feststellen der mit Dimensionierungen der Transporteinheiten in Zusammenhang stehenden Befestigungspositionen mit den mindestens zwei vorzugsweise stabförmig ausgebildeten Arbeitselementen mechanisch in Verbindung tritt und die mindestens zwei vorzugsweise stabförmig ausgebildeten Arbeitselemente hierauf zur jeweiligen Befestigungsposition am wenigstens einen Antriebsmittel bewegt, woraufhin die mindestens zwei stabförmig ausgebildeten Arbeitselemente in der jeweiligen Befestigungsposition am wenigstens einen Antriebsmittel festgesetzt werden.

In diversen Ausführungsformen kann vorgesehen sein, dass die mindestens zwei vorzugsweise stabförmig ausgebildeten Arbeitselemente bereits am wenigstens einen Antriebsmittel angeordnet sind, bevor die mindestens eine Handhabungseinrichtung mit den mindestens zwei vorzugsweise stabförmig ausgebildeten Arbeitselementen mechanisch in Verbindung tritt. Weiter kann die mindestens eine Handhabungseinrichtung zeitlich nach dem Vorgeben, dem Ermitteln und/oder dem Feststellen der mit Dimensionierungen der Transporteinheiten in Zusammenhang stehenden Befestigungspositionen die mindestens zwei stabförmig ausgebildeten und bereits am wenigstens einen Antriebselement angeordnete Arbeitselemente vom wenigstens einen Antriebselement abnehmen und zeitlich hierauf folgend zur jeweiligen Befestigungsposition am wenigstens einen Antriebsmittel bewegen. Hierauf können die mindestens zwei vorzugsweise stabförmig ausgebildeten Arbeitselemente in bzw. an der jeweiligen Befestigungsposition am wenigstens einen Antriebsmittel festgesetzt werden.

Es kann sein, dass die mindestens eine Handhabungseinrichtung über einen vorzugsweise als Revolvermagazin ausgebildeten Speicher verfügt, in welchem sich zeitgleich die mindestens zwei vorzugsweise stabförmig ausgebildeten Arbeitselemente befinden, für welche mindestens zwei vorzugsweise stabförmig ausgebildeten Arbeitselemente jeweils eine eigene Befestigungsposition am wenigstens einen Antriebsmittel vorgegeben, festgestellt und/oder ermittelt wird. Hierbei kann es sein, dass die mindestens eine Handhabungseinrichtung die Befestigungspositionen für die mindestens zwei im Speicher aufgenommenen vorzugsweise stabförmig ausgebildeten Arbeitselemente nacheinander anfährt und ein jeweiliges der mindestens zwei sich im Speicher befindlichen vorzugsweise stabförmig ausgebildeten Arbeitselemente bei Erreichen seiner jeweiligen Befestigungsposition aus dem Speicher freigibt, woraufhin das jeweilige aus dem Speicher freigegebene vorzugsweise stabförmig ausgebildete Arbeitselement in der jeweiligen Befestigungsposition am wenigstens einen Antriebsmittel festgesetzt wird.

Denkbar ist, dass die mindestens zwei vorzugsweise stabförmig ausgebildeten Arbeitselement bereits am wenigstens einen Antriebsmittel angeordnet sind, bevor die mindestens eine Handhabungseinrichtung mit den mindestens zwei vorzugsweise stabförmig ausgebildeten Arbeitselementen mechanisch in Verbindung tritt. Hierbei können die mindestens zwei vorzugsweise stabförmig ausgebildeten Arbeitselemente zeitlich vor Anfahren einer jeweiligen Befestigungsposition vom wenigstens einen Antriebsmittel jeweils abgenommen werden, so dass sich die mindestens zwei vorzugsweise stabförmig ausgebildeten Arbeitselemente zeitlich vor Anfahren der jeweiligen Befestigungsposition gemeinsam im Speicher befinden bzw. gemeinsam durch den Speicher aufgenommen sind.

Bewährt haben sich zudem Ausführungsformen, bei welchen eine Steuer- und/oder Regeleinheit insbesondere über einen Benutzer Informationen zu jeweiligen entlang der Transportstrecke zu bewegenden Transporteinheiten bereitgestellt werden, woraufhin die Steuer- und/oder Regeleinheit unter Berücksichtigung der bereitgestellten Informationen Befestigungspositionen für die mindestens zwei vorzugsweise stabförmig ausgebildeten Arbeitselemente vorgibt, ermittelt und/oder feststellt. Hierbei ist denkbar, dass die mindestens zwei vorzugsweise stabförmig ausgebildeten Arbeitselemente über die mindestens eine Handhabungseinrichtung selbständig jeweils vom wenigstens einen Antriebsmittel abgenommen werden, hierauf über die mindestens eine Handhabungseinrichtung selbständig in Richtung ihrer jeweiligen vorgegebenen, ermittelten und/oder festgestellten Befestigungsposition bewegt werden und sodann in ihrer jeweiligen vorgegebenen, festgestellten und/oder ermittelten Befestigungsposition am wenigstens einen Antriebsmittel festgesetzt werden.

Es kann sein, dass die mindestens eine Handhabungseinrichtung für eine Bewegung der mindestens zwei vorzugsweise stabförmig ausgebildeten Arbeitselemente in Richtung der jeweiligen Befestigungsposition mit einem RFID-System zusammenwirkt. Hierdurch kann auf einfache Art und Weise mittels des RFID-Systems eine Positionsbestimmung erfolgen und die mindestens zwei vorzugsweise stabförmig ausgebildeten Arbeitselemente in Richtung der jeweiligen Befestigungsposition bewegt werden.

In bevorzugten Ausführungsformen des Verfahrens und/oder des nachfolgend beschriebenen Systems ist es denkbar, dass die Transportstrecke durch eine Gruppierstation für Getränkebehältnisse und/oder eine Verpackungsstation zum Aufbringen thermoplastischen Verpackungsmaterials auf Getränkebehältnisse ausgebildet ist bzw. wird.

Auch kann es sein, dass das wenigstens eine Antriebsmittel - generell gebildet durch ein Zugmittel wie bspw. eine Kette o. dgl. - als Riemen und/oder als Seil ausgebildet ist, und dass die mindestens zwei vorzugsweise stabförmig ausgebildeten Arbeitselemente jeweils über mindestens einen Federmechanismus verfügen. Hierbei kann der jeweilige mindestens eine Federmechanismus eine Federkraft bereitstellen, über die das jeweilige vorzugsweise stabförmig ausgebildete Arbeitselement in der jeweiligen Befestigungsposition am wenigstens einen als Riemen und/oder als Seil ausgebildeten Antriebsmittel klemmend festgesetzt wird. in weiteren Ausführungsformen können alternative Mechanismen vorgesehen sein, um das mindestens eine Arbeitselement in der Befestigungsposition am wenigstens einen Antriebsmittel festzusetzen. Beispielsweise eignen sich hierzu auch Bajonettverbindungen.

Denkbar ist auch, dass am wenigstens einen Antriebsmittel eine Farbcodierung angebracht ist, welche eine Vielzahl möglicher Positionen zur Befestigung bzw. zum Festsetzen eines jeweiligen Arbeitselementes vorgibt. Unter Zuhilfenahme de Farbcodierung kann die mindestens eine Handhabungseinrichtung ggf. das jeweilige Arbeitselement in Richtung einer ermittelten, festgestellten und/oder vorgegebenen Befestigungsposition bewegen.

Die Erfindung betrifft darüber hinaus ein modifizierbares System zum Transportieren und Einwirken auf mindestens einen Artikel aufweisende Transporteinheiten. Merkmale, welche vorhergehend bereits zu diversen Ausführungsformen des erfindungsgemäßen Verfahrens beschrieben wurden, können ebenso bei nachfolgend beschriebenem System vorgesehen sein und werden daher nicht redundant erwähnt. Ebenso können nachfolgend zu diversen Ausführungsformen des Systems beschriebene Merkmale ggf. bei diversen Ausführungsformen des bereits beschriebenen Verfahrens vorgesehen sein.

Das System umfasst eine durch das System ausgebildete Transportstrecke zur Bewegung von Transporteinheiten. Entlang der Transportstrecke kann sich eine als Bestandteil des Systems ausgebildete Horizontalfördereinrichtung erstrecken, auf welcher Transporteinheiten während ihrer Bewegung entlang der Transportstrecke aufstehen.

Weiter umfasst das System eine Steuer- und/oder Regeleinheit, welche Informationen zu Dimensionierungen der entlang der Transportstrecke zu bewegenden Transporteinheiten entgegennehmen kann. Zur Entgegennahme der Informationen kann die Steuer- und/oder Regeleinheit ggf. mit einer optischen Erfassungseinrichtung in Verbindung stehen, unter Zuhilfenahme welcher optischen Erfassungseinrichtung die Steuer- und/oder Regeleinheit Dimensionierungen der jeweiligen entlang der Transportstrecke zu bewegenden Transporteinheiten vorgeben, feststellen und/oder ermitteln kann.

Bestandteil des Systems sind wenigstens ein vorzugsweise umlaufend geführtes Antriebsmittel und mindestens zwei vorzugsweise stabförmig ausgebildete Arbeitselemente, welche an dem wenigstens einen vorzugsweise umlaufend geführten Antriebsmittel angeordnet werden können. Insbesondere können wenigstens zwei Antriebsmittel vorgesehen sein, die parallel zueinander und jeweils umlaufend geführt werden.

Es ist vorgesehen, dass die Steuer- und/oder Regeleinheit mittels der Informationen zum Vorgeben, Ermitteln und/oder Feststellen von mit Dimensionierungen der entlang der Transportstrecke zu bewegenden Transporteinheiten in Zusammenhang stehenden Befestigungspositionen für die mindestens zwei vorzugsweise stabförmig ausgebildeten Arbeitselemente an dem wenigstens einen Antriebsmittel ausgebildet ist. Weiter ist vorgesehen, dass das System mindestens eine mit der Steuer- und/oder Regeleinheit in Verbindung stehende Handhabungseinrichtung umfasst, welche von der Steuer- und/oder Regeleinheit zum Erfassen und Bewegen der mindestens zwei Arbeitselemente in Richtung einer jeweiligen vorgegebenen, ermittelten und/oder festgestellten Befestigungsposition ausgebildet ist.

Es haben sich Ausführungsformen bewährt, bei welchen die mindestens eine Handhabungseinrichtung über einen vorzugsweise als Revolvermagazin ausgebildeten Speicher verfügt, über welchen die mindestens eine Handhabungseinrichtung mehrere Arbeitselemente zeitgleich aufnehmen kann. Weiter kann vorgesehen sein, dass die mindestens eine Handhabungseinrichtung durch mindestens einen Mehrachsroboter ausgebildet ist.

Im nachfolgenden Zusammenhang sollen nochmals verschiedene Besonderheiten und Vorteile des erfindungsgemäßen Systems anhand konkreter formulierten und definierten Schritten verdeutlicht werden, wie sie insbesondere bei diversen Ausführungsformen eines erfindungsgemäßen Verfahrens vorgesehen sein können. Wie bereits oben definiert, dient das hier beschriebene System dem Transportieren und Einwirken auf Transporteinheiten, die beispielsweise durch sog. Gebinde gebildet sein können, welche jeweils mehrere Getränkebehältnisse umfassen können. Ob die Getränkebehältnisse hierbei jeweils durch Schrumpffolien, durch sog. Wickelfolien, durch Umreifungsbänder, durch Klebepunkte oder durch eine Kombination dieser Befestigungsmittel zusammengehalten sind und solchermaßen das Gebinde oder die Transporteinheit bilden, ist hierbei ohne Belang.

Vorzugsweise umfasst das System eine hier nicht im Detail ausgeführte Steuer- und/oder Regeleinheit. Über geeignete Eingabemittel und/oder durch geeignete Schnittstellen kann die Steuer- und/oder Regeleinheit Informationen zu Dimensionierungen von entlang einer Transportstrecke zur bewegenden Transporteinheiten entgegennehmen. Die Informationen können beispielsweise von einem Benutzer in die Steuer- und/oder Regeleinheit eingegeben und/oder als Maschinensteuerungsprogramm eingelesen werden.

Das hier beschriebene System wird in aller Regel eine Gruppierstation sowie eine Verpackungsstation umfassen, wobei die Verpackungsstation in Bewegungs- bzw. Transportrichtung der Transporteinheiten auf die Gruppierstation folgt bzw. dieser nachgeordnet ist. In der Gruppierstation werden aus Stückgütern wie bspw. aus Getränkebehältnissen die bereits oben erwähnten Transporteinheiten (bzw. Gebinde) gebildet. Hierzu wird eine bestimmte, für eine jeweilige Transporteinheit vorgesehene Anzahl an Getränkebehältnissen oder Stückgütern gegenüber nachfolgenden Getränkebehältnissen oder Stückgütern kurzzeitig beschleunigt, so dass diese beschleunigten Getränkebehältnisse oder Stückgüter gegenüber den nachfolgenden Getränkebehältnissen oder Stückgütern beabstandet sind und hierdurch eine Anzahl oder Gruppierung für die jeweilige Transporteinheit ausbilden. Zur kurzzeitigen Beschleunigung sind eine Vielzahl an Arbeitselementen, die in der Gruppierstation als Einteilstäbe o. dgl. ausgebildet sein können, an jeweils umlaufend geführten und parallel zueinander orientierten Antriebsmitteln befestigt. Die Antriebsmittel sind jeweils als Seil, als Kette, als Riemen oder als anderes Zugmittel ausgebildet. Die Arbeitselemente bzw. Einteilstäbe werden klemmend an den Seilen oder Zugmitteln gehalten bzw. sind klemmend an den Seilen oder Zugmitteln festgesetzt.

Im Rahmen einer Formatumstellung, d.h. im Zusammenhang mit der Bildung größerer oder kleinerer Transporteinheiten oder bei der Verarbeitung größerer oder kleinerer Stückgüter oder Behälter kann sich eine Dimensionierung der Transporteinheiten ändern. Um die Transporteinheiten durch die bereits beschriebene kurzzeitige Beschleunigung von Getränkebehältnissen oder Stückgütern bilden zu können, muss eine relative Beabstandung der Arbeitselemente bzw. Einteilstäbe zueinander auf die jeweilige Dimensionierung der Transporteinheiten abgestimmt sein. Im Stand der Technik werden hierzu die Arbeitselemente bzw. Einteilstäbe von den Antriebselementen abgenommen und in der auf die jeweilige Dimensionierung von Transporteinheiten abgestimmten relativen Beabstandung wieder an den Antriebselementen befestigt. Eine Formatumstellung ist daher oftmals zeitaufwendig und umständlich.

Um bei einer Formatumstellung die Arbeitselemente bzw. Einteilstäbe in eine auf die jeweilige Dimensionierung der Transporteinheiten abgestimmte Befestigungsposition überführen zu können, umfasst das hier beschriebene System eine Handhabungseinrichtung, die mit der Steuer- und/oder Regeleinheit in Verbindung steht und/oder von dieser gesteuert wird. Die Handhabungseinrichtung kann bspw. als Portalroboter oder als Mehrachsroboter ausgebildet sein, wobei der Mehrachsroboter einen bewegbaren Arbeitsarm aufweist, an dessen Endbereich ein Speicher angeordnet sein kann. Dieser Speicher kann insbesondere als Revolvermagazin o. dgl. Ausgebildet sein, so dass er Arbeitselemente der Gruppierstation sowie nachfolgend noch beschriebene weitere Arbeitselemente einer Verpackungsstation aufnehmen kann. Hierzu wird der Speicher bzw. das Revolvermagazin über die Handhabungseinrichtung in Richtung eines jeweiligen an den Antriebsmitteln angeordneten Arbeitselementes bzw. Einteilstabes bewegt, woraufhin das jeweilige Arbeitselement bzw. der jeweilige Einteilstab von den Antriebsmitteln abgenommen und in den Speicher bzw. das Revolvermagazin eingesetzt wird.

Dieser Vorgang wird für sämtliche der an den Antriebsmitteln der Gruppierstation angeordneten und als Einteilstäbe ausgebildeten Arbeitselemente wiederholt, so dass sich hierauf sämtliche der Gruppierstation zugeordneten Arbeitselemente bzw. Einteilstäbe zeitgleich im Speicher befinden bzw. zeitgleich durch den Speicher aufgenommen sind. Die Abnahme des jeweiligen Arbeitselementes bzw. Einteilstabes von den Antriebsmitteln kann über die Handhabungseinrichtung bzw. den Mehrachsroboter selbständig, auf Veranlassung der Steuer- und/oder Regeleinheit somit automatisch und insbesondere ohne personenbezogene Unterstützung erfolgen.

Auf Veranlassung der Steuer- und/oder Regeleinheit bzw. auf Grundlage der dort abgespeicherten Steuerungsvorschriften bewegt die Handhabungseinrichtung sodann den Speicher bzw. das Revolvermagazin zusammen mit den im Speicher bzw. im Revolvermagazin aufgenommenen Arbeitselementen in Richtung auf die Dimensionierung zu bewegender Transporteinheiten abgestimmter und durch die Steuer- und/oder Regeleinheit festgestellter, ermittelte bzw. vorgegebener Befestigungspositionen. Nach Erreichen einer jeweiligen Befestigungsposition wird ein jeweiliges bis dahin im Speicher aufgenommenes Arbeitselement aus dem Speicher freigegeben und an der jeweiligen Befestigungsposition festgesetzt bzw. klemmend fixiert. Dieser Vorgang wird fortgesetzt, bis sich an jeder der durch die Steuer- und/oder Regeleinheit ermittelten bzw. festgestellten Befestigungspositionen ein Arbeitselement bzw. Einteilstab befindet. In der Folge dieser beschriebenen Umrüstungsvorgänge ist die Gruppierstation aufgrund der Formatumstellung an die Dimensionierung der jeweiligen zu bildenden und entlang der Transportstrecke zu bewegenden Transporteinheiten angepasst bzw. hierfür modifiziert.

Wie zuvor bereits erwähnt, ist der Gruppierstation in einer Bewegungsrichtung der Transporteinheiten normalerweise eine Verpackungsstation nachgeordnet. Es kann bspw. vorgesehen sein, dass über die durch Stäbe ausgebildeten Arbeitselemente der Verpackungsstation thermoplastisches Verpackungsmaterial auf mehrere Getränkebehältnisse aufweisende Transporteinheiten aufgebracht wird. Das Verpackungsmaterial kann durch eine geeignete Kunststofffolie wie bspw. durch Schrumpffolie gebildet sein.

Zusammen mit dem auf die Transporteinheiten aufgebrachten thermoplastischen Verpackungsmaterial verlassen die Transporteinheiten die Gruppierstation und treten sodann in einen Schrumpftunnel oder eine andere geeignete Nachbehandlungsstation ein, worin das thermoplastische Verpackungsmaterial auf die jeweilige Transporteinheit aufgeschrumpft werden kann, wodurch aus der Transporteinheit zusammen mit dem aufgeschrumpften thermoplastischen Verpackungsmaterial ein Gebinde hergestellt werden kann.

Im Rahmen einer Formatumstellung, bei welcher sich die Dimensionierung von entlang der Transportstrecke zu bewegenden Transporteinheiten ändert, ist es in aller Regel notwendig, die relative Beabstandung der als Bestandteil der Verpackungsstation ausgebildeten Arbeitselemente bzw. Stäbe zueinander anzupassen. Entsprechend der Gruppierstation werden die Arbeitselemente bzw. Stäbe in der Verpackungsstation auch an zwei parallel zueinander orientierten und umlaufend geführten Antriebsmitteln klemmend gehalten. Die als Bestandteil der Verpackungsstation vorgesehenen Antriebsmittel können als Seile oder als andere geeignete Zugmittel ausgebildet sein, bspw. als Riemen oder Ketten o. dgl.

Ein Arbeitsbereich der bspw. als Mehrachsroboter ausgebildeten Handhabungseinrichtung erstreckt sich vorzugsweise sowohl über die Gruppierstation als auch über die Verpackungsstation. Somit ist die Handhabungseinrichtung bei einer Formatumstellung auf Veranlassung der Steuer- und/oder Regeleinheit in die Lage versetzt, den Speicher in Richtung der Arbeitselemente bzw. Stäbe zu bewegen, welche der Verpackungsstation zugeordnet sind und sämtliche Arbeitselemente bzw. Stäbe, welche der Verpackungsstation zugeordnet sind, im Speicher bzw. im Revolvermagazin aufzunehmen. Zeitlich hierauf folgend bewegt die Handhabungseinrichtung auf Veranlassung der Steuer- und/oder Regeleinheit den Speicher zusammen mit den im Speicher aufgenommenen Arbeitselementen bzw. Stäben in Richtung von Befestigungspositionen, welche über die Steuer- und/oder Regeleinheit vorgegeben werden.

Nach Erreichen einer jeweiligen Befestigungsposition kann ein jeweiliges der Verpackungsstation zugeordnetes Arbeitselement bzw. ein jeweiliger der Verpackungsstation zugeordneter Stab in der jeweiligen Befestigungsposition an den parallel zueinander orientierten Antriebsmitteln bzw. Seilen klemmend befestigt werden. Die relative Beabstandung der Arbeitselemente bzw. Stäbe, welche der Verpackungsstation zugeordnet sind, ist somit an eine jeweilige Dimensionierung der Transporteinheiten angepasst, auf welche nach der Formatumstellung thermoplastisches Verpackungsmaterial aufgebracht werden soll. Durch die Ansteuerung der Handhabungseinrichtung über die Steuer- und/oder Regeleinheit, welche aus über einen Benutzer bereitgestellten Informationen Befestigungspositionen feststellt bzw. ermittelt, kann eine Umstellung bzw. Modifizierung des Systems für eine jeweilige Dimensionierung zu bewegender und zu manipulierender Transporteinheiten auf einfache und zeiteffiziente Art und Weise erfolgen. Die Modifizierung durch die Handhabungseinrichtung erfolgt unter Ansteuerung durch die Steuer- und/oder Regeleinheit insbesondere selbständig bzw. vollautomatisch, so dass kein manuelles Eingreifen notwendig ist, um das System im Rahmen einer Formatumstellung umzurüsten bzw. zu modifizieren.

Wahlweise kann zudem ein Schlitten oder ein Fahrwerk vorgesehen sein, an welchen die Handhabungseinrichtung mechanisch gekoppelt ist oder sein kann. Sofern dies für eine Formatumstellung notwendig oder zweckmäßig ist, kann die bspw. als Mehrachsroboter ausgebildete Handhabungseinrichtung sich über den optionalen Schlitten oder das optionale Fahrwerk in Richtung der Gruppierstation bzw. der Verpackungsstation bewegen, um dort Arbeitselemente bzw. entgegenzunehmen und in Richtung einer jeweiligen Befestigungsposition zu bewegen.

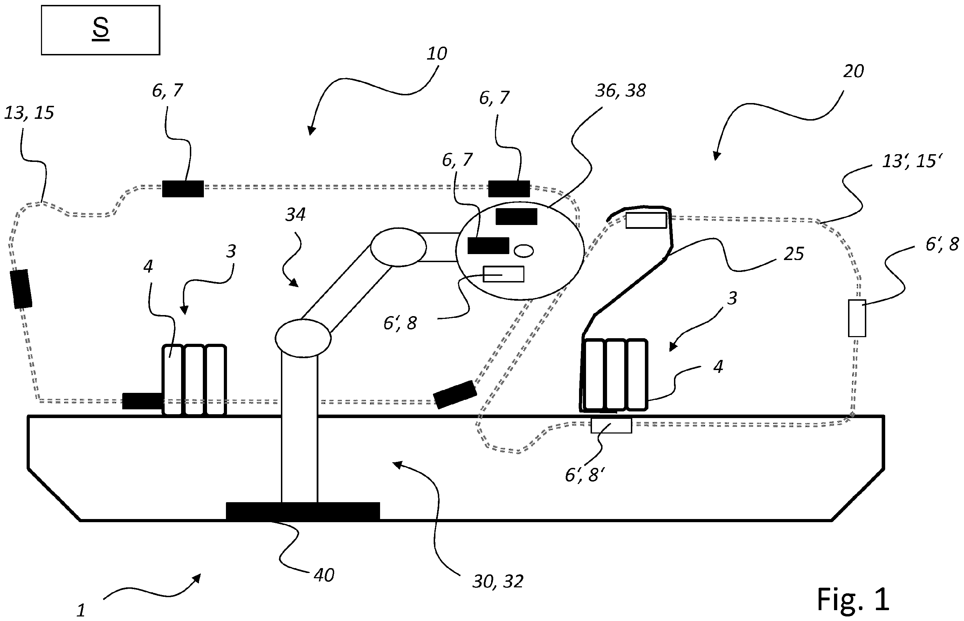

Im Folgenden soll ein Ausführungsbeispiel die Erfindung und ihre Vorteile anhand der beigefügten Fig. 1 näher erläutern. Die Größenverhältnisse der einzelnen Elemente zueinander entsprechen nicht immer den realen Größenverhältnissen, da einige Formen vereinfacht und andere Formen zur besseren Veranschaulichung vergrößert im Verhältnis zu anderen Elementen dargestellt sind.

Die einzige Fig. 1 zeigt hierbei eine schematische Ansicht einer Ausführungsform eines erfindungsgemäßen Systems und verdeutlicht einzelne Schritte, wie sie bei diversen Ausführungsformen eines erfindungsgemäßen Verfahrens vorgesehen sein können.

Die in der Fig. 1 dargestellte Ausführungsform stellt lediglich ein Beispiel dar, wie die Erfindung ausgestaltet sein kann und stellt keine abschließende Begrenzung dar. Auch können die nachfolgend zum Ausführungsbeispiel beschriebenen Merkmale jeweils im allgemeinen Zusammenhang Verwendung finden und sind nicht mit weiteren Merkmalen des dargestellten Ausführungsbeispiels verknüpft.

Die Fig. 1 zeigt hierbei eine schematische Ansicht einer Ausführungsform eines erfindungsgemäßen Systems 1 und verdeutlicht einzelne Schritte, wie sie bei diversen Ausführungsformen eines erfindungsgemäßen Verfahrens vorgesehen sein können. Das System 1 ist zum Transportieren und Einwirken auf Transporteinheiten 3 vorgesehen, welche Transporteinheiten 3 im Ausführungsbeispiel aus Fig. 1 jeweils mehrere Getränkebehältnisse 4 umfassen.

Zu erkennen ist eine als Bestandteil des Systems 1 ausgebildete, hier jedoch nur ganz schematisch angedeutete Steuer- und/oder Regeleinheit S. Über in Fig. 1 nicht dargestellte Eingabemittel oder durch geeignete Schnittstellen kann die Steuer- und/oder Regeleinheit S Informationen zu Dimensionierungen der entlang der Transportstrecke zur bewegenden und unter Verweis mit Ziffer 3 dargestellten Transporteinheiten entgegennehmen. Die Informationen können beispielsweise von einem Benutzer in die Steuer- und/oder Regeleinheit eingegeben und/oder als Maschinensteuerungsprogramm eingelesen werden.

Das gezeigte System 1 umfasst eine Gruppierstation 10 sowie eine Verpackungsstation 20, welche Verpackungsstation 20 in Bewegungs- bzw. Transportrichtung der Transporteinheiten 3 auf die Gruppierstation 10 folgt bzw. dieser nachgeordnet ist. In der Gruppierstation 10 werden aus Getränkebehältnissen 4 die in Fig. 1 bereits zu erkennenden Transporteinheiten 3 gebildet. Hierzu wird eine bestimmte für eine jeweilige Transporteinheit 3 vorgesehene Anzahl an Getränkebehältnissen 4 gegenüber nachfolgenden Getränkebehältnissen kurzzeitig beschleunigt, so dass diese beschleunigten Getränkebehältnisse 4 gegenüber den nachfolgenden Getränkebehältnissen beabstandet sind und hierdurch eine jeweilige Transporteinheit 3 ausbilden. Zur kurzzeitigen Beschleunigung sind eine Vielzahl an Arbeitselementen 6, die in der Gruppierstation 10 als Einteilstäbe 7 ausgebildet sind, an jeweils umlaufend geführten und parallel zueinander orientierten Antriebsmitteln 13 befestigt. Die Antriebsmittel 13 sind jeweils als Seil 15 ausgebildet. Die Arbeitselemente 6 bzw. Einteilstäbe 7 werden klemmend an den Seilen 15 gehalten bzw. sind klemmend an den Seilen 15 festgesetzt.

Im Rahmen einer Formatumstellung kann sich eine Dimensionierung der Transporteinheiten 3 ändern. Um die Transporteinheiten 3 durch die bereits beschriebene kurzzeitige Beschleunigung von Getränkebehältnissen 4 bilden zu können, muss eine relative Beabstandung der Arbeitselemente 6 bzw. Einteilstäbe 7 zueinander auf die jeweilige Dimensionierung der Transporteinheiten 3 abgestimmt sein. Im Stand der Technik werden hierzu die Arbeitselemente 6 bzw. Einteilstäbe 7 von den Antriebselementen 13 abgenommen und in der auf die jeweilige Dimensionierung von Transporteinheiten 3 abgestimmten relativen Beabstandung wieder an den Antriebselementen 13 befestigt. Eine Formatumstellung ist daher immer zeitaufwendig und umständlich.

Um bei einer Formatumstellung die Arbeitselemente 6 bzw. Einteilstäbe 7 in eine auf die jeweilige Dimensionierung der Transporteinheiten 3 abgestimmte Befestigungsposition überführen zu können, umfasst das System 1 eine Handhabungseinrichtung 30, die mit der Steuer- und/oder Regeleinheit S in Verbindung steht und/oder von dieser gesteuert wird. Die Handhabungseinrichtung 30 ist als Mehrachsroboter 32 ausgebildet und besitzt einen bewegbaren Arbeitsarm 34, an dessen Endbereich ein Speicher 36 angeordnet ist. Der Speicher 36 ist als Revolvermagazin 38 ausgebildet und kann Arbeitselemente 6 der Gruppierstation 10 sowie nachfolgend noch beschriebene Arbeitselemente 6' der Verpackungsstation 20 aufnehmen. Hierzu wird der Speicher 36 bzw. das Revolvermagazin 38 über die Handhabungseinrichtung 30 in Richtung eines jeweiligen an den Antriebsmitteln 13 angeordneten Arbeitselementes 6 bzw. Einteilstabes 7 bewegt, woraufhin das jeweilige Arbeitselement 6 bzw. der jeweilige Einteilstab 7 von den Antriebsmitteln 13 abgenommen und in den Speicher 36 bzw. das Revolvermagazin 38 eingesetzt wird.

Dieser Vorgang wird für sämtliche der an den Antriebsmitteln 13 der Gruppierstation angeordneten und als Einteilstäbe 7 ausgebildeten Arbeitselemente 6 wiederholt, so dass sich hierauf sämtliche der Gruppierstation 10 zugeordnete Arbeitselemente 6 bzw. Einteilstäbe 7 zeitgleich im Speicher 36 befinden bzw. zeitgleich durch den Speicher 36 aufgenommen sind. Die Abnahme des jeweiligen Arbeitselementes 6 bzw. Einteilstabes 7 von den Antriebsmitteln 13 kann über die Handhabungseinrichtung 30 bzw. den Mehrachsroboter 32 selbständig, auf Veranlassung der Steuer- und/oder Regeleinheit somit automatisch und insbesondere ohne personenbezogene Unterstützung erfolgen.

Auf Veranlassung der Steuer- und/oder Regeleinheit S bzw. auf Grundlage der dort abgespeicherten Steuerungsvorschriften bewegt die Handhabungseinrichtung 30 sodann den Speicher 36 bzw. das Revolvermagazin 38 zusammen mit den im Speicher 36 bzw. im Revolvermagazin 38 aufgenommenen Arbeitselementen 6 in Richtung auf die Dimensionierung zu bewegender Transporteinheiten 3 abgestimmter und durch die Steuer- und/oder Regeleinheit S festgestellter, ermittelte bzw. vorgegebener Befestigungspositionen. Nach Erreichen einer jeweiligen Befestigungsposition wird ein jeweiliges bis dahin im Speicher 36 aufgenommenes Arbeitselement 6 aus dem Speicher 36 freigegeben und an der jeweiligen Befestigungsposition festgesetzt bzw. klemmend fixiert. Dieser Vorgang wird fortgesetzt, bis sich an jeder der durch die Steuer- und/oder Regeleinheit S ermittelten bzw. festgestellten Befestigungspositionen ein Arbeitselement 6 bzw. Einteilstab 7 befindet. Sodann ist die Gruppierstation 10 aufgrund der Formatumstellung an die Dimensionierung der jeweiligen zu bildenden und entlang der Transportstrecke zu bewegenden Transporteinheiten 3 angepasst bzw. hierfür modifiziert.

Wie zuvor bereits erwähnt, ist der Gruppierstation 10 in einer Bewegungsrichtung der Transporteinheiten 3 eine Verpackungsstation 20 nachgeordnet. Die schematische Ansicht der Fig. 1 lässt hierbei erkennen, dass über die durch Stäbe 8 ausgebildeten Arbeitselemente 6' der Verpackungsstation 20 thermoplastisches Verpackungsmaterial 25 auf mehrere Getränkebehältnisse 4 aufweisende Transporteinheiten 3 aufgebracht wird.

Zusammen mit dem auf die Transporteinheiten 3 aufgebrachten thermoplastischen Verpackungsmaterial 25 verlassen die Transporteinheiten 3 die Gruppierstation 20 und treten sodann in einen in Fig. 1 nicht mit dargestellten Schrumpftunnel oder eine andere geeignete Nachbehandlungsstation ein, worin das thermoplastische Verpackungsmaterial 25 auf die jeweilige Transporteinheit 3 aufgeschrumpft wird, wodurch aus der Transporteinheit 3 zusammen mit dem aufgeschrumpften thermoplastischen Verpackungsmaterial 25 ein Gebinde hergestellt wird.

Im Rahmen einer Formatumstellung, bei welcher sich die Dimensionierung von entlang der Transportstrecke zu bewegenden Transporteinheiten 3 ändert, ist es in aller Regel notwendig, die relative Beabstandung der als Bestandteil der Verpackungsstation 20 ausgebildeten Arbeitselemente 6' bzw. Stäbe 8 zueinander anzupassen. Entsprechend der Gruppierstation 10 werden die Arbeitselemente 6' bzw. Stäbe 8 in der Verpackungsstation 20 auch an zwei parallel zueinander orientierten und umlaufend geführten Antriebsmitteln 13' klemmend gehalten. Die als Bestandteil der Verpackungsstation 20 vorgesehenen Antriebsmittel 13' sind weiterhin als Seile 15' ausgebildet.

Ein Arbeitsbereich der mit der Bezugsziffer 30 gekennzeichneten und als Mehrachsroboter 32 ausgebildeten Handhabungseinrichtung erstreckt sich sowohl über die Gruppierstation 10 als auch über die Verpackungsstation 20. Somit ist die Handhabungseinrichtung 30 bei einer Formatumstellung auf Veranlassung der Steuer- und/oder Regeleinheit S in die Lage versetzt, den Speicher 36 in Richtung der Arbeitselemente 6' bzw. Stäbe 8 zu bewegen, welche der Verpackungsstation 20 zugeordnet sind und sämtliche Arbeitselemente 6' bzw. Stäbe 8, welche der Verpackungsstation 20 zugeordnet sind, im Speicher 36 bzw. im Revolvermagazin 38 aufzunehmen. Zeitlich hierauf folgend bewegt die Handhabungseinrichtung 30 auf Veranlassung der Steuer- und/oder Regeleinheit S den Speicher 36 zusammen mit den im Speicher 8 aufgenommenen Arbeitselementen 6' bzw. Stäben 8 in Richtung von Befestigungspositionen, welche über die Steuer- und/oder Regeleinheit S vorgegeben werden.

Nach Erreichen einer jeweiligen Befestigungsposition wird ein jeweiliges der Verpackungsstation 20 zugeordnetes Arbeitselement 6' bzw. ein jeweiliger der Verpackungsstation 20 zugeordneter Stab 8 in der jeweiligen Befestigungsposition an den parallel zueinander orientierten Antriebsmitteln 13' bzw. Seilen 15' klemmend befestigt. Die relative Beabstandung der Arbeitselemente 6' bzw. Stäbe 8, welche der Verpackungsstation 20 zugeordnet sind, ist somit an eine jeweilige Dimensionierung der Transporteinheiten 3 angepasst, auf welche nach der Formatumstellung thermoplastisches Verpackungsmaterial 25 aufgebracht werden soll. Durch die Ansteuerung der Handhabungseinrichtung 30 über die Steuer- und/oder Regeleinheit S, welche aus über einen Benutzer bereitgestellten Informationen Befestigungspositionen feststellt bzw. ermittelt, kann eine Umstellung bzw. Modifizierung des Systems 1 für eine jeweilige Dimensionierung zu bewegender und zu manipulierender Transporteinheiten 3 auf einfache und zeiteffiziente Art und Weise erfolgen. Die Modifizierung durch die Handhabungseinrichtung 30 erfolgt unter Ansteuerung durch die Steuer- und/oder Regeleinheit S selbständig bzw. vollautomatisch, so dass kein manuelles Eingreifen notwendig ist, um das System 1 im Rahmen einer Formatumstellung umzurüsten bzw. zu modifizieren.

Die Bezugsziffer 40 verweist zudem auf einen Schlitten oder ein Fahrwerk, an welchen die Handhabungseinrichtung 30 mechanisch gekoppelt ist oder sein kann. Sofern dies für eine Formatumstellung notwendig oder zweckmäßig ist, kann die als Mehrachsroboter 32 ausgebildete Handhabungseinrichtung 30 sich über den Schlitten oder das Fahrwerk 40 in Richtung der Gruppierstation 10 bzw. der Verpackungsstation 20 bewegen, um dort Arbeitselemente 6 bzw. 6' entgegenzunehmen und in Richtung einer jeweiligen Befestigungsposition zu bewegen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

1 System
3 Transporteinheit
4 Getränkebehältnis
6, 6' Arbeitselement
7 Einteilstab
8, 8' Stab
10 Gruppierstation
13, 13' Antriebsmittel
15, 15' Seil
20 Verpackungsstation
25 Thermoplastisches Verpackungsmaterial
30 Handhabungseinrichtung
32 Mehrachsroboter
34 Arbeitsarm
36 Speicher
38 Revolvermagazin
40 Schlitten oder Fahrwerk
S Steuer- und/oder Regeleinheit

## Patentansprüche

1. Verfahren zum Anpassen einer Transportstrecke an jeweilige Dimensionierungen von entlang der Transportstrecke zu bewegenden und zu manipulierenden Transporteinheiten (3), wobei das Verfahren zumindest die folgenden Schritte umfasst:
- Vorgeben, Ermitteln und/oder Feststellen von mit Dimensionierungen der entlang der Transportstrecke zu bewegenden Transporteinheiten (3) in Zusammenhang stehenden Befestigungspositionen für mindestens zwei vorzugsweise stabförmig ausgebildete Arbeitselemente (6, 6') an wenigstens einem insbesondere umlaufend bewegten Antriebsmittel (13, 13'),
- Festsetzen der mindestens zwei vorzugsweise stabförmig ausgebildeten Arbeitselemente (6, 6') an dem wenigstens einen insbesondere umlaufend bewegten Antriebsmittel (13, 13') an einer jeweiligen vorgegebenen, ermittelten und/oder festgestellten Befestigungsposition, und
- Bewegen der Transporteinheiten (3) entlang der Transportstrecke, wobei zeitlich überlagert mit der Bewegung das wenigstens eine Antriebsmittel (13, 13') umlaufend angetrieben wird und hieraus resultierend die mindestens zwei vorzugsweise stabförmig ausgebildeten und an der jeweiligen Befestigungsposition festgesetzten Arbeitselemente (6, 6') auf die Transporteinheiten (3) einwirken, wobei
mindestens eine Handhabungseinrichtung (30) vorgesehen ist, welche zeitlich nach dem Vorgeben, dem Ermitteln und/oder dem Feststellen der mit den Dimensionierungen der Transporteinheiten (3) in Zusammenhang stehenden Befestigungspositionen mit den mindestens zwei vorzugsweise stabförmig ausgebildeten Arbeitselementen (6) mechanisch in Verbindung tritt und die mindestens zwei vorzugsweise stabförmig ausgebildeten Arbeitselemente (6) hierauf zur jeweiligen Befestigungsposition am wenigstens einen Antriebsmittel (13,13') bewegt, woraufhin die mindestens zwei vorzugsweise stabförmig ausgebildeten Arbeitselemente (6, 6') in der jeweiligen Befestigungsposition am wenigstens einen Antriebsmittel (13, 13') festgesetzt werden.

2. Verfahren nach Anspruch 1, bei dem die mindestens zwei Arbeitselemente (6, 6') bereits am wenigstens einen Antriebsmittel (13, 13') angeordnet sind, bevor die mindestens eine Handhabungseinrichtung (30) mit den mindestens zwei Arbeitselementen (6, 6') mechanisch in Verbindung tritt, wobei die mindestens eine Handhabungseinrichtung (30) zeitlich nach dem Vorgeben, dem Ermitteln und/oder dem Feststellen der mit Dimensionierungen der Transporteinheiten (3) in Zusammenhang stehenden Befestigungspositionen die mindestens zwei vorzugsweise stabförmig ausgebildeten und bereits am wenigstens einen Antriebsmittel (13, 13') angeordneten Arbeitselemente (6, 6') jeweils vom wenigstens einen Antriebsmittel (13, 13') abnimmt und zeitlich hierauf folgend zur jeweiligen Befestigungsposition am wenigstens einen Antriebsmittel (13, 13') bewegt, woraufhin die mindestens zwei vorzugsweise stabförmig ausgebildeten Arbeitselemente (6, 6') in der jeweiligen Befestigungsposition am wenigstens einen Antriebsmittel (13, 13') festgesetzt werden.

3. Verfahren nach Anspruch 1 oder 2, bei dem die mindestens eine Handhabungseinrichtung (30) über einen vorzugsweise als Revolvermagazin (38) ausgebildeten Speicher (36) verfügt, in welchem sich zeitgleich die mindestens zwei stabförmig ausgebildeten Arbeitselemente (6, 6') befinden, für welche mindestens zwei vorzugsweise stabförmig ausgebildeten Arbeitselemente (6, 6') jeweils eine eigene Befestigungsposition am wenigstens einen Antriebsmittel (13, 13') vorgegeben, festgestellt und/oder ermittelt wird, wobei die mindestens eine Handhabungseinrichtung (30) die Befestigungspositionen für die mindestens zwei im Speicher (36) aufgenommenen vorzugsweise stabförmig ausgebildeten Arbeitselemente (6, 6') nacheinander anfährt und ein jeweiliges der mindestens zwei sich im Speicher (36) befindlichen vorzugsweise stabförmig ausgebildeten Arbeitselemente (6, 6') bei Erreichen seiner jeweiligen Befestigungsposition aus dem Speicher (36) freigibt, woraufhin das jeweilige aus dem Speicher (36) freigegebene vorzugsweise stabförmig ausgebildete Arbeitselement (6, 6') in der jeweiligen Befestigungsposition am wenigstens einen Antriebsmittel (13, 13') festgesetzt wird.

4. Verfahren nach Anspruch 3, bei dem die mindestens zwei vorzugsweise stabförmig ausgebildeten Arbeitselemente (6, 6') bereits am wenigstens einen Antriebsmittel (13, 13') angeordnet sind, bevor die mindestens eine Handhabungseinrichtung (30) mit den mindestens zwei vorzugsweise stabförmig ausgebildeten Arbeitselementen (6, 6') mechanisch in Verbindung tritt, wobei die mindestens zwei vorzugsweise stabförmig ausgebildeten Arbeitselemente (6, 6') zeitlich vor Anfahren einer jeweiligen Befestigungsposition vom wenigstens einen Antriebsmittel (13, 13') jeweils abgenommen werden, so dass sich die mindestens zwei vorzugsweise stabförmig ausgebildeten Arbeitselemente (6, 6') zeitlich vor Anfahren der Befestigungspositionen gemeinsam im Speicher (36) befinden bzw. gemeinsam durch den Speicher (36) aufgenommen sind.

5. Verfahren nach einem der Ansprüche 1 bis 4, wobei einer Steuer- und/oder Regeleinheit (S) insbesondere über einen Benutzer Informationen zu jeweiligen entlang der Transportstrecke zu bewegenden Transporteinheiten (3) bereitgestellt werden, woraufhin die Steuer- und/oder Regeleinheit (S) unter Berücksichtigung der bereitgestellten Informationen Befestigungspositionen für die mindestens zwei vorzugsweise stabförmig ausgebildeten Arbeitselemente (6, 6') vorgibt, ermittelt und/oder feststellt, und wobei
die mindestens zwei vorzugsweise stabförmig ausgebildeten Arbeitselemente (6, 6') über die mindestens eine Handhabungseinrichtung (30) selbständig jeweils vom wenigstens einen Antriebsmittel (13, 13') abgenommen werden, hierauf über die mindestens eine Handhabungseinrichtung (30) selbständig in Richtung ihrer jeweiligen vorgegebenen, ermittelten und/oder festgestellten Befestigungsposition bewegt werden und sodann in ihrer jeweiligen vorgegebenen, festgestellten und/oder ermittelten Befestigungsposition am wenigstens einen Antriebsmittel (13, 13') festgesetzt werden.

6. Verfahren nach einem der Ansprüche 1 bis 5, bei dem die mindestens eine Handhabungseinrichtung (30) für eine Bewegung der mindestens zwei vorzugsweise stabförmig ausgebildeten Arbeitselemente (6, 6') in Richtung der Befestigungspositionen einem RFID-System zusammenwirkt.

7. Verfahren nach einem der Ansprüche 1 bis 6, bei dem die Transportstrecke durch eine Gruppierstation (10) für Getränkebehältnisse (4) und/oder eine Verpackungsstation (20) zum Aufbringen thermoplastischen Verpackungsmaterials (20) auf Getränkebehältnisse (4) gebildet wird.

8. Verfahren nach einem der Ansprüche 1 bis 7, bei dem das wenigstens eine Antriebsmittel (13, 13') als Riemen und/oder als Seil (15, 15') ausgebildet ist und bei welchem die mindestens zwei vorzugsweise stabförmig ausgebildeten Arbeitselemente (6, 6') jeweils über mindestens einen Federmechanismus verfügen, wobei der jeweilige mindestens eine Federmechanismus eine Federkraft bereitstellt, über die das jeweilige vorzugsweise stabförmig ausgebildete Arbeitselement (6, 6') in der jeweiligen Befestigungsposition am wenigstens einen als Riemen und/oder Seil (15, 15') ausgebildeten Antriebsmittel (13, 13') klemmend festgesetzt wird.

9. Modifizierbares System (1) zum Transportieren und Einwirken auf mindestens einen Artikel aufweisende Transporteinheiten (3), umfassend zumindest:
- eine durch das System (1) ausgebildete Transportstrecke zur Bewegung von Transporteinheiten (3),
- eine Steuer- und/oder Regeleinheit (S), welche Informationen zu Dimensionierungen der entlang der Transportstrecke zur bewegenden Transporteinheiten (3) entgegennehmen kann,
- wenigstens ein vorzugsweise umlaufend geführtes Antriebsmittel (13, 13') und
- mindestens zwei vorzugsweise stabförmig ausgebildete Arbeitselemente (6, 6'), welche an dem wenigstens einen vorzugsweise umlaufend geführten Antriebsmittel (6, 6') angeordnet werden können, wobei
die Steuer- und/oder Regeleinheit (S) mittels der Informationen zum Vorgeben, Ermitteln und/oder Feststellen von mit Dimensionierungen der entlang der Transportstrecke zu bewegenden Transporteinheiten (3) in Zusammenhang stehenden Befestigungsposition für die mindestens zwei vorzugsweise stabförmig ausgebildeten Arbeitselemente (6, 6') an dem wenigstens einen Antriebsmittel (13, 13') ausgebildet ist, und wobei
das System (1) mindestens eine mit der Steuer- und/oder Regeleinheit (S) in Verbindung stehende Handhabungseinrichtung (30) umfasst, welche von der Steuer- und/oder Regeleinheit (S) zum Erfassen und Bewegen der mindestens zwei vorzugsweise stabförmig ausgebildeten Arbeitselemente (6, 6') in Richtung einer jeweiligen vorgegebenen, ermittelten und/oder festgestellten Befestigungsposition entlang der Transportstrecke, ausgebildet ist.

10. Modifizierbares System nach Anspruch 9, bei welchem die mindestens Handhabungseinrichtung (30) über einen vorzugsweise als Revolvermagazin (38) ausgebildeten Speicher (36) verfügt, über welchen die Handhabungseinrichtung (30) mehrere Arbeitselemente (6, 6') zeitgleich aufnehmen kann.

11. Modifizierbares System nach Anspruch 9 oder Anspruch 10, bei welchem die mindestens eine Handhabungseinrichtung (30) durch mindestens einen Mehrachsroboter (32) ausgebildet ist.

12. System nach einem der Ansprüche 9 bis 11, bei dem die Transportstrecke durch eine Gruppierstation (10) für Getränkebehältnisse (4) und/oder eine Verpackungsstation (20) zum Aufbringen thermoplastischen Verpackungsmaterials (20) auf Getränkebehältnisse (4) gebildet ist.

## Claims

1. A method for adapting a transport path to respective dimensions of transport units (3), which transport units (3) are to be moved and manipulated along the transport path, the method comprising at least the following steps:
- specifying, determining and/or establishing fastening positions for at least two preferably rod-shaped working elements (6, 6') on at least one drive means (13, 13'), which drive means (13, 13') is moved in particular in a circulating manner, which fastening positions are connected with the dimensions of the transport units (3), which are to be moved along the transport path,
- fixing the at least two preferably rod-shaped working elements (6, 6') at a respective specified, determined and/or established fixing position to the at least one drive means (13, 13'), which drive means (13, 13') is moved in particular in a circulating manner, and
- moving the transport units (3) along the transport path, wherein the at least one drive means (13, 13') is being driven in circulation, which movement of the drive means (13, 13') is superimposed in time with the movement of the transport units (3) and, as a result, the at least two working elements (6, 6'), which are preferably rod-shaped and are fixed at the respective fastening position, are acting on the transport units (3), wherein
at least one handling device (30) is provided, which handling device (30), temporarily after the specification, determination and/or establishing of the fastening positions associated with the dimensions of the transport units (3), comes into mechanical connection with the at least two preferably rod-shaped working elements (6) and then moves the at least two preferably rod-shaped working elements (6) to the respective fastening position on the at least one drive means (13, 13'), whereupon the at least two preferably rod-shaped working elements (6, 6') are fixed in the respective fastening position on the at least one drive means (13, 13').

2. The method according to claim 1, in which the at least two working elements (6, 6') are already arranged on the at least one drive means (13, 13') before the at least one handling device (30) enters into mechanical connection with the at least two working elements (6, 6'), wherein the at least one handling device (30), in time after the specification, determination and/or establishing of the fastening positions connected with the dimensioning of the transport units (3), removes the at least two working elements (6, 6'), which are preferably in the form of rods and are already arranged on the at least one drive means (13, 13'), in each case from the at least one drive means (13, 13') and, following this in time, moves them to the respective fastening position on the at least one drive means (13, 13'), whereupon the at least two preferably rod-shaped working elements (6, 6') are fixed in the respective fastening position on the at least one drive means (13, 13').

3. The method according to claim 1 or 2, in which the at least one handling device (30) has a storage (36), which storage (36) is preferably designed as a turret magazine (38), and in which storage (36) the at least two rod-shaped working elements (6, 6') are located at the same time, for which at least two preferably rod-shaped working elements (6, 6') a respective individual fastening position on the at least one drive means (13, 13') is specified, determined and/or established, wherein the at least one handling device (30) successively approaches the fastening positions for the at least two preferably rod-shaped working elements (6, 6') accommodated in the storage (36), and wherein a respective one of the at least two preferably rod-shaped working elements (6, 6') located in the storage (36) is released from the storage (36) when its respective fastening position is reached, whereupon the respective preferably rod-shaped working element (6, 6') released from the storage (36) is fixed in the respective fastening position on the at least one drive means (13, 13').

4. The method according to claim 3, in which the at least two preferably rod-shaped working elements (6, 6') are already arranged on the at least one drive means (13, 13') before the at least one handling device (30) comes into mechanical connection with the at least two preferably rod-shaped working elements (6, 6'), wherein the at least two preferably rod-shaped working elements (6, 6') are each removed from the at least one drive means (13, 13') at a time before a respective fastening position is approached, so that the at least two preferably rod-shaped working elements (6, 6') are located together within the storage (36) at a time before the fastening positions are approached or are jointly accommodated within the storage (36).

5. The method according to one of the claims 1 to 4, wherein information on respective transport units (3) to be moved along the transport path is provided to a control and/or regulating unit (S), in particular via a user, whereupon the control and/or regulating unit (S) specifies, determines and/or establishes fastening positions for the at least two preferably rod-shaped working elements (6, 6'), taking into account the information provided, and wherein
the at least two preferably rod-shaped working elements (6, 6') are each removed independently from the at least one drive means (13, 13') via the at least one handling device (30), are then moved independently via the at least one handling device (30) in the direction of their respective specified, determined and/or established fastening position and are then fixed in their respective specified, determined and/or established fastening position on the at least one drive means (13, 13').

6. The method according to one of the claims 1 to 5, in which the at least one handling device (30) cooperates with an RFID system for a movement of the at least two preferably rod-shaped working elements (6, 6') in the direction of the fastening positions.

7. The method according to one of the claims 1 to 6, wherein the transport path is formed by a grouping station (10) for beverage containers (4) and/or a packaging station (20) for applying thermoplastic packaging material (25) to beverage containers (4).

8. The method according to one of the claims 1 to 7, in which the at least one drive means (13, 13') is designed as a belt and/or as a cable (15, 15') and in which the at least two preferably rod-shaped working elements (6, 6') each have at least one spring mechanism, wherein the respective at least one spring mechanism provides a spring force by means of which the respective preferably rod-shaped working element (6, 6') is fixed in a clamping manner in the respective fastening position on the at least one drive means (13, 13'), which drive means (13, 13') is designed as a belt and/or cable (15, 15').

9. A modifiable system (1) for transporting and acting on transport units (3), the transport units (3) comprising at least one article, the system (1) comprising at least:
- a transport path formed by the system (1) for moving transport units (3),
- a control and/or regulating unit (S) which can receive information on the dimensions of the transport units (3) to be moved along the transport path,
- at least one preferably circumferentially guided drive means (13, 13') and
- at least two preferably rod-shaped working elements (6, 6') which can be arranged on the at least one preferably circumferentially guided drive means (6, 6'), wherein
by means of the information the control and/or regulating unit (S) is designed to specify, determine and/or establish fastening positions for the at least two preferably rod-shaped working elements (6, 6') on the at least one drive means (13, 13'), which fastening positions are connected to dimensions of the transport units (3) to be moved along the transport path, and wherein
the system (1) comprises at least one handling device (30), which handling device (30) is connected to the control and/or regulating unit (S), and which handling device (30) is designed via the control and/or regulating unit (S) to detect and move the at least two preferably rod-shaped working elements (6, 6') in the direction of a respective specified, determined and/or established fastening position along the transport path.

10. The modifiable system according to claim 9, in which the at least handling device (30) has a storage (36), preferably in the form of a turret magazine (38), via which the handling device (30) can receive a plurality of working elements (6, 6') simultaneously.

11. The modifiable system according to claim 9 or claim 10, wherein the at least one handling device (30) is formed by at least one multi-axis robot (32).

12. The System according to one of the claims 9 to 11, wherein the transport path is formed by a grouping station (10) for beverage containers (4) and/or a packaging station (20) for applying thermoplastic packaging material (25) to beverage containers (4).

## Revendications

1. Procédé d'adaptation d'un trajet de transport à des dimensionnements respectifs d'unités de transport (3) à déplacer le long du trajet de transport et à manipuler, le procédé comprenant au moins les étapes suivantes consistant à:
- spécifier, déterminer et/ou constater des positions de fixation en relation avec des dimensionnements des unités de transport (3) à déplacer le long du trajet de transport, pour au moins deux éléments de travail (6, 6') réalisés de préférence en forme de tige, sur au moins un moyen d'entraînement (13, 13') en particulier déplacé en circulation,
- fixer lesdits au moins deux éléments de travail (6, 6a) réalisés de préférence en forme de tige, audit au moins un moyen d'entraînement (13, 13') en particulier déplacé en circulation, sur une position de fixation respective spécifiée, déterminée et/ou constatée, et
- déplacer les unités de transport (3) le long du trajet de transport, dans lequel ledit au moins un moyen d'entraînement (13, 13') est entraîné en circulation en superposition temporelle avec le déplacement d'où résulte que lesdits au moins deux éléments de travail (6, 6') réalisés de préférence en forme de tige et fixés sur la position de fixation respective agissent sur les unités de transport (3), dans lequel
au moins un dispositif de manipulation (30) est prévu qui entre en contact mécanique avec lesdits au moins deux éléments de travail (6) réalisés de préférence en forme de tige, après la spécification, la détermination et/ou la constatation des positions de fixation en relation avec les dimensionnements des unités de transport (3), et déplace ensuite lesdits au moins deux éléments de travail (6) réalisés de préférence en forme de tige vers la position de fixation respective sur ledit au moins un moyen d'entraînement (13, 13'), ce après quoi lesdits au moins deux éléments de travail (6, 6') réalisés de préférence en forme de tige sont fixés dans la position de fixation respective sur ledit au moins un moyen d'entraînement (13, 13').

2. Procédé selon la revendication 1, dans lequel lesdits au moins deux éléments de travail (6, 6') sont déjà disposés sur ledit au moins un moyen d'entraînement (13, 13') avant que ledit au moins un dispositif de manipulation (30) entre en contact mécanique avec lesdits au moins deux éléments de travail (6, 6'), dans lequel ledit au moins un dispositif de manipulation (30) retire dudit au moins un moyen d'entraînement (13, 13') respectivement lesdits au moins deux éléments de travail (6, 6') réalisés de préférence en forme de tige et déjà disposés sur ledit au moins un moyen d'entraînement (13, 13'), après que les positions de fixation en relation avec des dimensionnements des unités de transport (3) ont été spécifiées, déterminées et/ou constatées, et, puis, déplace ceux-ci vers la position de fixation respective sur ledit au moins un moyen d'entraînement (13, 13'), ce après quoi lesdits au moins deux éléments de travail (6, 6') réalisés de préférence en forme de tige sont fixés dans la position de fixation respective sur ledit au moins un moyen d'entraînement (13, 13').

3. Procédé selon la revendication 1 ou 2, dans lequel ledit au moins un dispositif de manipulation (30) dispose d'un magasin (36), de préférence conçu en tant que magasin revolver (38), dans lequel lesdits au moins deux éléments de travail (6, 6') réalisés en forme de tige se trouvent en même temps, une propre position de fixation sur ledit au moins un moyen d'entraînement (13, 13') est spécifiée, constatée et/ou déterminée pour lesquels au moins deux éléments de travail (6, 6') réalisés de préférence en forme de tige, dans lequel ledit au moins un dispositif de manipulation (30) arrive aux positions de fixation, l'une après l'autre, pour lesdits au moins deux éléments de travail (6, 6 ') réalisés de préférence en forme de tige et reçus dans le magasin (36) et libère, dudit magasin (36), un élément de travail (6, 6') respectif desdits au moins deux éléments de travail (6, 6') réalisés de préférence en forme de tige et se trouvant dans le magasin (36), lorsqu'il atteint sa position de fixation respective, ce après quoi l'élément de travail (6, 6') respectif réalisé de préférence en forme de tige et libéré du magasin (36) est fixé dans la position de fixation respective sur ledit au moins un moyen d'entraînement (13, 13').

4. Procédé selon la revendication 3, dans lequel lesdits au moins deux éléments de travail (6, 6') réalisés de préférence en forme de tige sont déjà disposés sur ledit au moins un moyen d'entraînement (13, 13') avant que ledit au moins un dispositif de manipulation (30) entre en contact mécanique avec lesdits au moins deux éléments de travail (6, 6') réalisés de préférence en forme de tige, dans lequel lesdits au moins deux éléments de travail (6, 6') réalisés de préférence en forme de tige sont retirés respectivement dudit au moins un moyen d'entraînement (13, 13') avant l'arrivée à une position de fixation respective, de sorte que lesdits au moins deux éléments de travail (6, 6') réalisés de préférence en forme de tige sont situés ensemble dans le magasin (36) ou bien sont reçus ensemble par le magasin (36) avant l'arrivée aux positions de fixation.

5. Procédé selon l'une quelconque des revendications 1 à 4, dans lequel des informations relatives à des unités de transport (3) respectives à déplacer le long du trajet de transport sont fournies à une unité de commande et/ou de régulation (S), en particulier par un utilisateur, ce après quoi l'unité de commande et/ou de régulation (S) spécifie, détermine et/ou constate des positions de fixation pour lesdits au moins deux éléments de travail (6, 6') réalisés de préférence en forme de tige, en prenant en considération les informations fournies, et dans lequel
lesdits au moins deux éléments de travail (6, 6') réalisés de préférence en forme de tige sont retirés automatiquement dudit au moins un moyen d'entraînement (13, 13') par ledit au moins un dispositif de manipulation (30), puis sont déplacés automatiquement par ledit au moins un dispositif de manipulation (30) en direction de leur position de fixation respective spécifiée, déterminée et/ou constatée et sont fixés ensuite dans leur position de fixation respective spécifiée, constatée et/ou déterminée sur ledit au moins un moyen d'entraînement (13, 13).

6. Procédé selon l'une quelconque des revendications 1 à 5, dans lequel ledit au moins un dispositif de manipulation (30) agit de concert avec un système RFID pour déplacer lesdits au moins deux éléments de travail (6, 6') réalisés de préférence en forme de tige en direction des positions de fixation.

7. Procédé selon l'une quelconque des revendications 1 à 6, dans lequel le trajet de transport est formé par un poste de regroupement (10) pour des récipients à boisson (4) et/ou par un poste d'emballage (20) pour appliquer du matériau d'emballage thermoplastique (25) aux récipients à boisson (4).

8. Procédé selon l'une quelconque des revendications 1 à 7, dans lequel ledit au moins un moyen d'entraînement (13, 13') est réalisé en tant que courroie et/ou câble (15, 15') et dans lequel lesdits au moins deux éléments de travail (6, 6') réalisés de préférence en forme de tige comprennent chacun au moins un mécanisme à ressort, ledit au moins un mécanisme à ressort respectif fournissant une force de ressort par laquelle l'élément de travail (6, 6') respectif réalisés de préférence en forme de tige est fixé par serrage dans la position de fixation respective sur ledit au moins un moyen d'entraînement (13, 13') réalisé en tant que courroie et/ou câble (15, 15').

9. Système modifiable (1) destiné à transporter et à agir sur des unités de transport (3) présentant au moins un article, comprenant au moins:
- un trajet de transport formé par le système (1) et destiné à déplacer des unités de transport (3),
- une unité de commande et/ou de régulation (S) qui peut recevoir des informations relatives à des dimensionnements des unités de transport (3) à déplacer le long du trajet de transport,
- au moins un moyen d'entraînement (13, 13') guidé de préférence en circulation, et
- au moins deux éléments de travail (6, 6') réalisés de préférence en forme de tige qui peuvent être disposés sur ledit au moins un moyen d'entraînement (6, 6') guidé de préférence en circulation, dans lequel
l'unité de commande et/ou de régulation (S) est conçue pour spécifier, déterminer et/ou constater, au moyen des informations, des positions de fixation pour lesdits au moins deux éléments de travail (6, 6) réalisés de préférence en forme de tige, sur ledit au moins un moyen d'entraînement (13, 13'), lesquelles sont en relation avec des dimensionnements des unités de transport (3) à déplacer le long du trajet de transport, et dans lequel
le système (1) comprend au moins un dispositif de manipulation (30) qui est en communication avec l'unité de commande et/ou de régulation (S) et qui est conçu pour saisir et déplacer lesdits au moins deux éléments de travail (6, 6') réalisés de préférence en forme de tige en direction d'une position de fixation respective spécifiée, déterminée et/ou constatée par l'unité de commande et/ou de régulation (S), le long du trajet de transport.

10. Système modifiable selon la revendication 9, dans lequel ledit au moins un dispositif de manipulation (30) dispose d'un magasin (36), de préférence conçu en tant que magasin revolver (38), par l'intermédiaire duquel le dispositif de manipulation (30) peut recevoir en même temps plusieurs éléments de travail (6, 6').

11. Système modifiable selon la revendication 9 ou la revendication 10, dans lequel ledit au moins un dispositif de manipulation (30) est formé par au moins un robot multi-axes (32).

12. Système selon l'une quelconque des revendications 9 à 11, dans lequel le trajet de transport est formé par un poste de regroupement (10) pour des récipients à boisson (4) et/ou par un poste d'emballage (20) pour appliquer du matériau d'emballage thermoplastique (25) à des récipients à boisson (4).
